# EUROPEAN PATENT APPLICATION

(11) **EP 3 637 612 A1**
(43) Date of publication of application: **15.04.2020**
(21) Application number: 18813381.3
(22) Date of filing: 01.06.2018
(51) Int. Cl.: H02P 7/28

(54) **TRACTION CONVERTER OF AN ALTERNATING-CURRENT LOCOMOTIVE FOR TRACTION AND REGENERATIVE-BRAKING MODES**

(30) Priority: 07.06.2017 RU 2017120002
(71) Applicant: Open Joint Stock Company "Russian Railways", Moscow 170174 (RU)
(72) Inventor: MELNICHENKO, Oleg Valeryevich, g. Irkutsk, Irkutskaya obl. 664039 (RU); PORTNOY, Aleksandr Yuryevich, g. Irkutsk, Irkutskaya obl. 664003 (RU); SHRAMKO, Sergey Gennadyevich, Irkutsk, Irkutskaya obl. 664040 (RU); LINKOV, Aleksey Olegovich, g. Irkutsk, Irkutskaya obl. 664039 (RU); YAGOVKIN, Dmitriy Andreevich, g. Irkutsk, Irkutskaya obl. 664039 (RU)
(74) Representative: Martegani, Franco
(86) International application number: PCT/RU2018/000356
(87) International publication number: WO 2018/226120

(57) **Abstract**

The invention relates to converter technology and is intended for use as a traction converter in alternative current locomotives. The technical result is an increase in the power factor, and smooth regulation of the voltage in commutator motors in traction and regenerative-braking modes. A traction converter of a locomotive is connected to a traction transformer and comprises a controllable bridge which is connected to a section of a secondary winding of the traction transformer, and diode arms which are connectable to the remaining outputs of the secondary windings of the traction transformer via a set of contactors , forming n regulation zones. In traction mode, a commutator motor is a load; in regenerative-braking mode the commutator motor is a generator, in which power is supplied independently to an excitation winding from an excitation rectifying unit.

## Description

### Field of the Invention

The invention relates to electrical engineering, in particular to converter equipment, and is intended for use in alternative current electrical stock as a traction converter.

### Prior Art

The VL80T, VL80S alternating current locomotive is known (VL80T Electric Locomotive: Operation Manual / Ed. by B.R. Bondarenko, - M.: Transport Publ. House, 1977, - 368 pp.; VL80S Electric Locomotive: Operation Manual / N.M. Vasko, A.S. Devyatkov, A.F. Kucherov et al. - 2nd edition, as revised and supplemented. - M: Transport Publ. House, 1990, - 454 pp., 315 Pictures, 26 Tables), wherein a VUK-type rectifying unit is used as a traction converter. This unit uses diodes as uncontrolled rectifiers that are connected according to a well-known bridge circuit. For the purpose of changing a speed of an electric locomotive, rectified voltage is changed at the commutator of a traction electric motor by means of switching the sections of the traction transformer secondary winding by the main controller. Disadvantages of this electric locomotive are the stepwise control of rectified voltage and the use of a rheostatic brake.

A multizone rectifier-inverter converter for alternating current locomotives with commutator traction electric motors is known (RU 2498490C1, 10.11.2013) (prototype). This converter comprises arms based on IGBT-transistors and forming a circuit of a full-wave bridge rectifier, and an additional diode arm connected in parallel to a rectified current circuit. A method for controlling a multizone rectifier-inverter converter in the regenerative braking mode is known (RU 2573821C2, 27.01.2016) that enables to achieve a high power factor in this mode. The main disadvantage of this converter is its high cost because a significant number of high-class IGBT-transistors are used.

### Summary of the Invention

A traction converter for an alternative current locomotive for traction and regenerative braking modes, connected to a multiwinding traction transformer, having the load in the form of a commutator motor, characterized in that one winding of the traction transformer is connected to a controllable bridge based on IGBT-transistors and configured for smooth regulation of voltage in the commutator motor by changing switch-on and switch-off time of IGBT-transistors of the controllable bridge within each voltage half-period; the subsequent secondary windings of the traction transformer are connected with the use of contactors via diode arms, thus forming ***n*** control zones; an excitation winding of the commutator motor may be connected to an excitation rectifying unit.

### Description of the Drawings

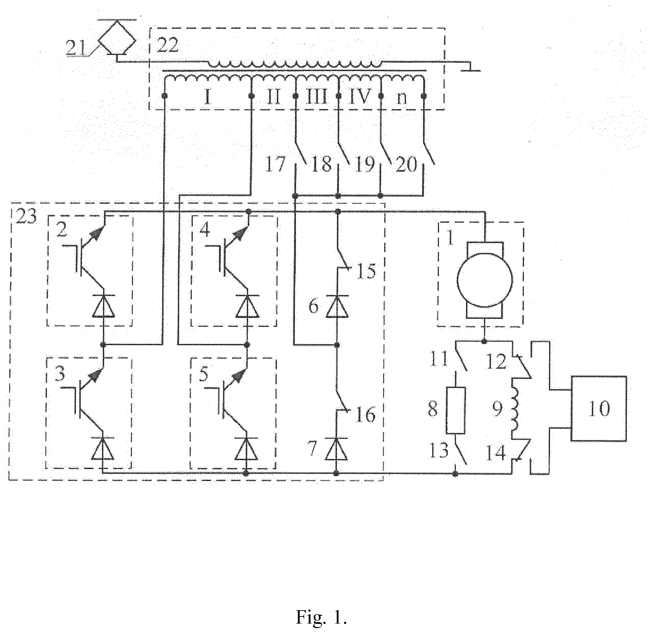

Figure 1 shows the schematic diagram of an electric locomotive with the proposed alternative current traction converter, as configured for the traction mode.

### Best Mode for Carrying Out the Invention

The circuit comprises: a traction converter (23) comprising controllable arms (2...5) consisting of an IGBT-transistor and in-series diode, which are connected to the secondary winding I of a traction transformer (TT) (22); diode arms (6, 7); contactors (15, 16) configured for switching the operation mode of an electric locomotive (traction/regeneration); contactors (17...20) configured for switching on and off the TT secondary winding sections (II, III, IV, V, n); a current collector (pantograph) (21); an armature winding of a commutator traction electric motor (1); a unit (8) of ballast resistors (UBR); an excitation winding (EW) (9); an excitation rectifying unit (ERU) (10): contactors (11, 13) for connecting the UBR in the regeneration mode; contactors (12, 14) for switching the EW from the traction mode to the regeneration mode.

In the traction mode, the EW is series-connected to the armature winding 1 by means of the contactors 12, 14. The contactors 15, 16 are used for connecting the diode arms 6 and 7. The arms 2...5 are connected to the secondary winding I of the traction transformer 22; voltage on the commutator motor is increased by means of successively connecting the secondary windings (II, III, IV, V, n) by closing the respective contactor 17...20 and forming n control zones. Voltage supplied to the commutator motor in the first zone is smoothly controlled by means of the arms 2...5, and in the higher zones by means of the arms 2 and 3.

In the mode of regenerative braking, the EW is connected to the ERU (10) by means of the contactors 12, 14. The contactors 15, 16 are opened, the UBR (8) is connected to the circuit by means of the contactors 11, 13. The arms 2...5 are connected to the secondary winding I of the traction transformer 22, they are used for smoothly controlling the traction motor voltage. The contactors 17...20 are opened.

The technical result is the provision of the power factor in the traction and regenerative-braking modes comparable to the power factor of a rectifier-inverter converter based on IGBT-transistors (RU 2498490C1, 10.11.2013; RU 2573821C2, 27.01.2016), and the provision of smooth regulation of the commutator motor voltage, as well as a smaller number of semiconductor devices in the traction converter circuit.

## Claims

1. A traction converter for an alternative current locomotive for traction and regenerative-braking modes, connected to a multiwinding traction transformer, having a load in the form of a commutator motor, **characterized in that** one winding of the traction transformer is connected to a controllable bridge based on IGBT-transistors and configured for smooth regulation of the voltage in the commutator motor by changing switch-on and switch-off time of IGBT-transistors of the controllable bridge within each voltage half-period; the subsequent secondary windings of the traction transformer are connected with the use of contactors via diode arms, thus forming ***n*** control zones; an excitation winding of the commutator motor is designed to be connected to an excitation rectifying unit.
